# EUROPEAN PATENT APPLICATION

(11) **EP 4 564 531 A1**
(43) Date of publication of application: **04.06.2025**
(21) Application number: 23213121.9
(22) Date of filing: 29.11.2023
(51) Int. Cl.: H01M 10/647, H01M 10/653, H01M 10/6551, H01M 10/6554, H01M 10/6555, H01M 10/6556, H01M 10/6557, H01M 50/209

(54) **BATTERY SYSTEM AND HEAT TRANSFER UNIT FOR BATTERY SYSTEM**

(71) Applicant: Samsung SDI Co., Ltd., Yongin-si, Gyeonggi-do 17084 (KR)
(72) Inventor: Nemes, Marton, 8054 Seiersberg-Pirka (AT); Kraberger, Gernot, 8010 Graz (AT)
(74) Representative: Gulde & Partner

(57) **Abstract**

The present disclosure refers to a battery system (100), comprising:
a plurality of battery cells (12, 14, 16, 18, 22, 24, 26, 28) arranged in at least one battery cell stack (10, 20), wherein thermally isolating cell spacers (30) are positioned between the battery cells (12, 14, 16, 18, 22, 24, 26, 28), and
a heat transfer unit (40) being disposed on one side of the at least one battery cell stack (10, 20) and comprising a first heat transfer element (52) and a second heat transfer element (54) thermally isolated from each other. The first heat transfer element (52) is adapted to establish a thermally conductive contact at least one of battery cells (12, 16, 22, 26) arranged in even low of the at least one battery cell stack (10, 20) and the second heat transfer element (54) is adapted to establish a thermally conductive contact at least one of battery cells (14, 18, 24, 28) arrange in odd low of the at least one battery cell stack (10, 20).

## Description

### Field of the Disclosure

The present disclosure relates to a battery system, a heat transfer unit for a battery system, and a method for transferring heat within a battery system according to the generic term of the independent patent claims.

### Technological Background

Recently, vehicles for transportation of goods and peoples have been developed that use electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator or a hydrogen fuel power cell. A hybrid vehicle may include a combination of an electric motor and conventional combustion engine. Generally, an electric-vehicle battery, (EVB, or traction battery) is a battery used to power the propulsion of battery electric vehicles, BEVs. Electric-vehicle batteries differ from starting, lighting, and ignition batteries in that they are designed to provide power for sustained periods of time. A rechargeable (or secondary) battery differs from a primary battery in that it is designed to be repeatedly charged and discharged, while the latter is designed to provide only an irreversible conversion of chemical to electrical energy. Low-capacity rechargeable batteries are used as power supplies for small electronic devices, such as cellular phones, notebook computers and camcorders, while high-capacity rechargeable batteries are used as power supplies for electric and hybrid vehicles and the like.

Generally, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case such as cylindrical or rectangular, may be selected based on the battery's intended purpose. Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled to each other in series and/or in parallel so as to provide a high density, such as for motor driving of a hybrid vehicle. For example, the battery module may be formed by interconnecting the electrode terminals of the plurality of unit battery cells in an arrangement or configuration depending on a desired required amount of power and in order to realize a high-power rechargeable battery.

Battery modules can be constructed in either a block design or in a modular design. In the block design each battery is coupled to a common current collector structure and a common battery management system and the unit thereof is arranged in a housing. In the modular design, pluralities of battery cells are connected together to form submodules and several submodules are connected together to form the battery module. In automotive applications, battery systems generally include of a plurality of battery modules connected in series for providing a desired voltage. The battery modules may include submodules with a plurality of stacked battery cells and each stack includes cells connected in parallel that are, in turn, connected in series (*XpYs*) or cells connected in series that are, in turn, connected in parallel (*XsYp*)*.*

A battery pack is a set of any number of (usually identical) battery modules. The battery modules may be configured in a series, parallel or a mixture of both to deliver the desired voltage, capacity, and/or power density. Components of a battery pack include the individual battery modules, and the interconnects, which provide electrical conductivity between the battery modules.

Exothermic decomposition of cell components may lead to a so-called thermal runaway. Generally, thermal runaway describes a process that accelerates due to increased temperature, in turn releasing energy that further increases temperature. Thermal runaway occurs in situations when an increase in temperature changes the conditions in a way that causes a further increase in temperature, often leading to a destructive result. In rechargeable battery systems, thermal runaway is associated with strong exothermic reactions that are accelerated by temperature rise. These exothermic reactions include combustion of flammable gas compositions within the battery pack housing. For example, when a cell is heated above a critical temperature (for example, above 150°C) the cell can transition into a thermal runaway. The initial heating may be caused by a local failure, such as a cell internal short circuit, heating from a defective electrical contact, a short circuit to a neighboring cell, etc. During the thermal runaway, a failed battery cell, (e.g., a battery cell that has a local failure) may reach a temperature exceeding 700°C. Further, large quantities of hot gas are ejected from inside of the failed battery cell through the venting opening of the cell housing into the battery pack. The main components of the vented gas are H₂, CO₂, CO, electrolyte vapor and other hydrocarbons. The vented gas is therefore flammable and potentially toxic. The vented gas also causes a gas-pressure to increase inside the battery pack.

In this respect, a battery module is known from US 2021 / 0 359 355 A1 in which includes a plurality of battery cells, wherein these are arranged in the form of a stack of battery cells. The battery cells are for example rechargeable lithium ion battery cells or lithium polymer battery cells. The stack of battery cells is enclosed at its outer face by a mechanical bracing device. This on the one hand brings about stationary fixing of the battery cells of the stack of battery cells relative to adjacent battery cells and also prevents an excessive increase in the volume of the battery cells when in operation as a result of the electrochemical processes inside the battery cells.

Furthermore, DE 10 2020 102 387 A1 discloses a battery module for a traction battery of an electrically driven motor vehicle with a cell assembly made of round cells. An outside of the cell assembly is enclosed by cell housing areas from the edge in the cell assembly arranged round cells. The battery module further includes a protective device which is designed to protect at least two round cells arranged adjacent to one another in the cell assembly from an accident-related force and to prevent thermal propagation between the at least two adjacent round cells. The protective device has at least one force protection area which at least partially overlaps with the outside of the cell assembly on the at least two adjacent round cells. The protection device has at least one with the force protection area mechanically connected heat protection area, which is arranged between the two adjacent round cells for thermal insulation of the two adjacent round cells.

However, in actual pack designs when a cell goes to thermal runaway, the generated heat spreads through the cell to cell spacers and accumulates in directly adjacent neighboring cells of the battery pack. This may trigger a thermal runaway of the adjacent cell(s). Thermal propagation in this way develops and may lead to catastrophic burndown of the battery pack.

### Summary of Invention

The invention is defined by the appended claims. The description that follows is subjected to this limitation. Any disclosure lying outside the scope of said claims is only intended for illustrative as well as comparative purposes.

According to one aspect of the present disclosure, there is provided a battery system with a plurality of battery cells arranged in at least one battery cell stack, wherein thermally isolating cell spacers are positioned between the battery cells, and a heat transfer unit being disposed on one side of the at least one battery cell stack and comprising a first heat transfer element and a second heat transfer element thermally isolated from each other, wherein the first heat transfer element is adapted to establish a thermally conductive contact at least one of battery cells arranged in an even row of the at least one battery cell stack and the second heat transfer element is adapted to establish a thermally conductive contact at least one of battery cells arranged in an odd row of the at least one battery cell stack.

According to another aspect of the present disclosure, there is provided a heat transfer unit for a battery system comprising two heat transfer elements separated from each other by a thermal isolation layer, wherein each heat transfer elements comprises a shaft that holds a plurality of contact faces arranged on both sides of the shaft and forming two rows of contact faces with regular intervals between the contact faces.

According to another aspect of the present disclosure, a method for transferring heat within a battery system is provided. The method comprises the steps of:
a) providing a battery system as described in the above-mentioned paragraphs;
b) connecting the battery cells of each battery cell stack of the battery system to the heat transfer unit, wherein
c) each of the two heat transfer elements is arranged such that the first heat transfer element contacts at least one of battery cells arranged in an even row of the two battery cell stacks and the second heat transfer element contacts at least one of battery cells arrange in an odd row of the two battery cell stacks, and
d) transferring heat from a heated battery cell of one of the battery cell stacks via the heat transfer unit, such that a critical temperature which leads to thermal runaway of a battery cell adjacent to the heated battery cell is not exceeded.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic view of battery system known from prior art.
- Fig. 2: illustrates a schematic view of an example of a battery system according to the invention.
- Fig. 3: illustrates an example of a heat transfer unit according to the invention.
- Fig. 4: illustrates a flowchart of a process according to the invention for transferring heat of a heated-up battery cell within such a battery system.

### Detailed Description of the invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. Expressions such as "at least one of," when preceding a list of elements, modify the entire list of elements and do not modify the individual elements of the list.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

The invention is directed to a battery system, including a plurality of battery cells arranged in at least one battery cell stack, wherein thermally isolating cell spacers are positioned between the battery cells, and a heat transfer unit being disposed on one side of the at least one battery cell stack, and comprising a first heat transfer element and a second heat transfer element thermally isolated from each other.

The first heat transfer element is adapted to establish a thermally conductive contact at least one of battery cells arranged in an even row of the at least one battery cell stack and the second heat transfer element is adapted to establish a thermally conductive contact at least one of battery cells arranged in an odd row of the at least one battery cell stack.

In other words, the invention is related to a battery cell stack with a plurality of battery cells, each battery cell separated to the neighbor cell by a thermally isolating cell spacer, wherein the battery cells are thermally conductive connected to a heat transfer unit to dissipate heat from a heated battery cell and minimize heat transfer to immediately adjacent cells of the heated battery cell.

The heat transfer unit conducts the of a heated battery cell, e.g. in case of a malfunction of a battery cell, so that the thermal impact to the immediately adjacent battery cells of the heated battery cell is minimized. This prevents the whole battery cell stack from a thermal runaway and a chain reaction that could lead to a burn down of the battery system. If the heat is transferred to regions of the battery cell stack not directly adjected to the heated battery cell, such a thermal runaway can be prevented so that only the heated battery cell with the malfunction is affected. This does not only improve the safety of the battery cell, but also makes it possible and cost effective to repair a battery system by simple changing the one affected battery cell.

In an embodiment of the battery system, the battery system includes at least a first battery cell stack including a plurality of battery cells accommodated within the first battery cell stack and a second battery cell stack including a plurality of battery cells accommodated within the second battery cell stack arranged in parallel to the first cell stack. Each of the cell stacks includes thermally isolating cell spacers positioned between the battery cells of the battery cell stack. A heat transfer unit is arranged between the first battery cell stack and the second battery cell stack and includes two heat transfer elements, thermally isolated from and nested inside each other, wherein each of the two heat transfer elements is arranged such that the first heat transfer element contacts at least one of battery cells arranged in an even row of the two battery cell stacks and the second heat transfer element contacts at least one of battery cells arranged in an odd row of the two battery cell stacks.

In other words, the embodiment of the invention is related to a battery system including at least two cell stacks arranged in parallel, wherein each of the battery cell stacks includes a plurality of battery cells and thermally isolating cell spacers. The battery cells and cell spacers are alternately stacked along their main sides. The battery system includes a heat transfer unit (or a heat spreader or heat dissipating member) which is arranged between and extends along the two battery cell stacks. The heat transfer unit includes two heat transfer elements (or heat spreaders) having a comb shape which are thermally isolated from and nested inside each other. Each of the two heat spreaders is arranged such that it contacts battery cells of the two cell stacks.

The heat transfer unit spreads heat of a battery cell in case of a thermal runaway to any battery cell, e. g., battery cells arranged in even or odd rows of the cell stack but not to the neighbor cells within the same cell stack. Thereby, on one hand heat of the affected cell is conducted away, while on the other hand the heat is not conducted into the directly neighboring cells, which get already heated up to some degree via the not perfectly isolating cell spacers. This allows to keep the temperature of the neighbor cells of the same cell stack of the high temperature cell below a critical temperature and thus prevents the neighboring cells from heating up to such an extent that a chain reaction occurs and the complete battery system is destroyed by a thermal runaway.

According to an embodiment of the invention, the first heat transfer element and the second heat transfer element of the heat transfer unit are arranged in a comb structure including a shaft that holds a row of contact faces. The comb structure allows a compact and smart design of the heat transfer unit, such that battery cells arranged in even or odd rows of each battery cell stack can be either connected to the first heat transfer element or the second heat transfer element of the heat transfer unit. This make is easier to dissipate heat from a heated battery cell and minimize heat transfer to immediately adjacent cells of the heated battery cell.

According to another embodiment of the invention, the first heat transfer element and the second heat transfer element of the heat transfer unit are made of a material which has a higher thermal conductivity than a battery cell housing of the battery cell. A high thermal conductivity is advantageous to transfer the heat from the heated battery cell. To avoid a thermal runaway of the neighbor cells within the battery stack it is beneficial that the heat transfer elements of the heat transfer unit have a higher thermal conductivity than the battery cell housings of the battery cells to decrease the heat transfer via the thermally isolating cell spacer of a battery cell stack.

The heat transfer elements may be made of copper. Copper does not only provide a high thermal conductivity, but also a high melting point, so that the heat transfer element remains dimensionally stable and can dissipate heat even if a battery cell is thermally punctured.

According to another embodiment of the invention, a thermal isolation layer is arranged between the first heat transfer element and the second heat transfer element of the heat transfer unit. The thermal isolation layer is beneficial to avoid heat transfer to a neighbor battery cell of a heated battery cell. The thermal isolation layer allows to transfer the heat mainly to battery cells arranged in even or odd rows of a battery cell stack, so that the direct neighbor battery cells of a heated battery cells are at least not heat up by a high thermal conductivity, but only by radiation, so that a critical thermal load for the neighbor battery cells of the heated battery cell can be avoided.

The thermal isolation layer may be made of a plastic coating or a ceramic coating. A plastic coating or a ceramic coating can by applied to the heat transfer unit quite easily and with little cost effect. Furthermore, such a plastic or ceramic coat can provide a high thermal isolation between the two heat transfer elements of the heat transfer unit. While a ceramic coating will most probably withstand the high temperatures such as those encountered during thermal failure of a battery cell, e.g. a thermal runaway of one battery cell of a battery cell stack, the plastic coating will melt down, but still provide enough thermal isolation to avoid a significant heat transfer to the neighbor battery cell.

In another embodiment of the invention, the thermal isolation layer is made of glass fiber material. Glass fiber material is known as thermically and electrically isolation in printed circuits. A glass fiber material is also well suited to separate the first heat transfer element from the second heat transfer element of the heat transfer unit.

According to an embodiment of the invention, the heat transfer unit is designed as a hollow body. A heat transfer unit with a hollow body is preferred, as the hollow body reduces the weight of the battery system. Furthermore, a hollow body has a lower heat capacity and can therefore dissipate the heat from the heated battery cell more quickly.

In an embodiment of the invention, the battery cells of each battery cell stack are connected to the heat transfer unit via a side surface of a battery cell housing of the battery cell. The battery cell housing of a battery cell has a front surface, a back surface and two side surfaces. The front surface and the back surface extend wider than the side surface, such that a prismatic battery cell has a shorter side with a side surface and a longer side with either the front surface or the back surface. The connecting of the battery cell housing of the battery cell to the heat transfer unit via the side surface allows a compact battery system with high energy density and low installation space requirements.

According to an embodiment of the invention, the battery cells are prismatic battery cells. Prismatic battery cells can be easily assembled in parallel stacks, so that the heat can be transferred from the prismatic battery cells. The heat transfer unit could also be used for round cells with an adapted design, so that neighbor battery cells are connected to different heat transfer elements of the heat transfer unit.

According to another aspect of the present disclosure, the invention is related to a heat transfer unit for a battery system, including two heat transfer elements separated from each other by a thermal isolation layer, wherein each heat transfer element comprises a shaft that holds a plurality of contact faces arranged on both sides of the shaft and forming two rows of contact faces with regular intervals between the contact faces. The heat transfer unit conducts the of a heated battery cell, e.g. in case of a malfunction of a battery cell, so that the thermal impact to the immediately adjacent battery cells of the heated battery cell is minimized. This prevents the whole battery cell stack from a thermal runaway and a chain reaction that could lead to a burn down of the battery system. If the heat is transferred to regions of the battery cell stack not directly adjected to the heated battery cell, such a thermal runaway can be prevented so that only the heated battery cell with the malfunction is affected. This does not only improve the safety of the battery cell, but also makes it possible and cost effective to repair a battery system by simple changing the one affected battery cell.

In an embodiment of the invention, the heat transfer unit includes two heat transfer elements thermally isolated from and nested inside each other. Each of the two heat transfer elements is designed such that the first heat transfer element contacts battery cells arranged in even rows of the two battery cell stacks and the second heat transfer element contacts battery cells arranged in odd rows of the two battery cell stacks, when the heat transfer unit is inserted into a battery system.

According to an embodiment of the heat transfer unit, the contact faces extend perpendicular to the shaft, wherein the contact faces include a first portion and a second portion, the second portion being perpendicular to the first portion and the contact faces of one side of the shaft being directly opposite to the contact faces of the other side of the shaft. This allows and easy thermal conductive connection between the side faces of the battery cell housing and the heat transfer unit and reduces the heat to the immediately adjacent battery cells of the heated battery cell as the heat dissipation from a heated battery cell is improved.

In an embodiment of the invention, the first heat transfer element and the second heat transfer element of the heat transfer unit are stamped and bent parts. Stamped and bent parts are easy to manufacture at low rates. Furthermore, stamped and bent parts can be manufactured from a coil material, which allows mass production in a very simple way.

In another embodiment of the invention, a thermal isolation layer is formed between the first heat transfer element and the second heat transfer element of the heat transfer unit. The thermal isolation layer can be formed in a coating process on either one or both heat transfer elements of the heat transfer unit. The thermal isolation layer can also be formed by an injection molding process on either on or both heat transfer elements of the heat transfer unit. In an example, the two heat transfer elements are connected to each other by an injection molding process, forming a plastic insulation element between the first heat transfer element and the second heat transfer element of the heat transfer unit.

### Specific Embodiments

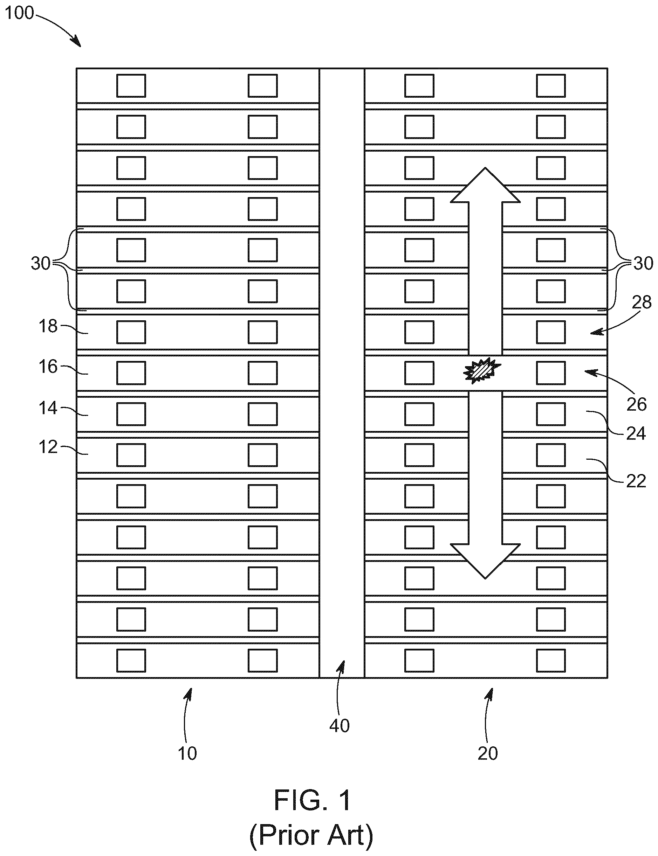

Fig. 1 is a schematic view of a battery system 100 known from prior art. The battery system 100 includes a first cell stack 10 with a plurality of battery cells 12, 14, 16, 18 and a second battery stack 20 with another plurality of battery cells 22, 24, 26, 28, wherein the first cell stack 10 and the second cell stack 10 are arranged in parallel. There are thermally isolating cell spacers 30 arranged in the first cell stack 10 and in the second cell stack 20 between each battery cell 12, 14, 16, 18, 22, 24, 26, 28 of the cell stacks 10, 20. Fig. 1 shows a battery cell 26 of the second cell stack 20 which, due to a malfunction, heats up to such an extent that it is irreversibly damaged. A heat transfer unit 40 is arranged between the first cell stack 10 and the second cell stack 20 to be able to dissipate the heat of the heated battery cell 26 from the second cell stack 20.

However, the thermal conductivity of the heat transfer unit 40 in this case is not sufficiently large to be able to be used in a thermal runaway to safe the neighbor cells 24, 28 of the heated battery cell 26. Also, the thermal isolating cell spacer 30 do not withstand the thermal load, such that the generated heat of the heated battery cell 26 spreads through the thermal isolating cell spacers 30 and accumulates in the neighbor cells 24, 28, where the heat triggers a thermal runaway of the neighbor cells 24, 28. Thermal propagation in this way develops and leads to a catastrophic burndown of the whole battery systems 100 or at least the affected battery stack 20.

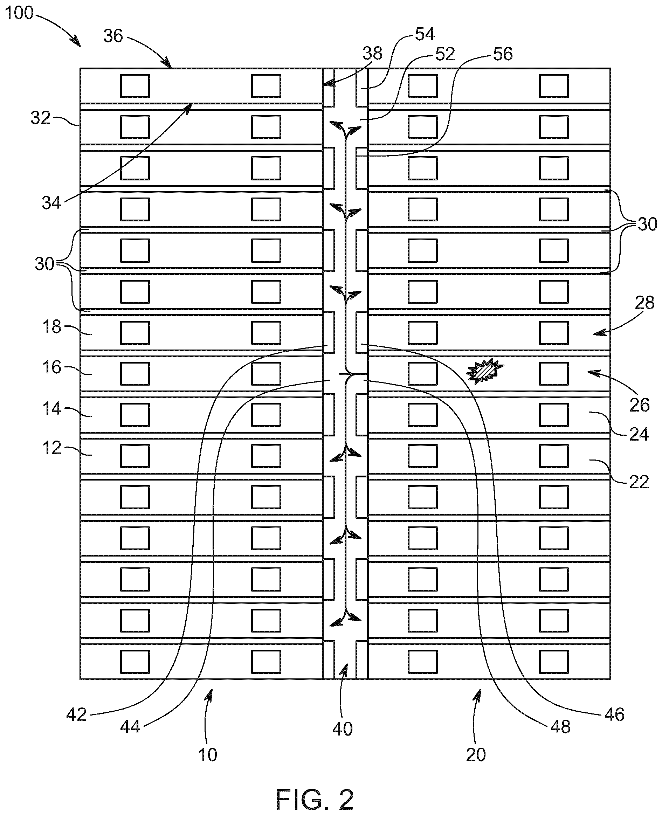

Fig. 2 discloses an example of a battery system 100 according to the invention. The battery system includes a first battery cell stack 10 including a plurality of battery cells 12, 14, 16, 18 accommodated within the first battery cell stack 10 and a second battery cell stack 20 including a plurality of battery cells 22, 24, 26, 28 accommodated within the second battery cell stack 20 arranged in parallel to the first cell stack 10. Each of the cell stacks 10, 20 includes thermally isolating cell spacers 30 positioned between a front surface 34 of a cell housing 32 of each battery cells 12, 14, 16, 18, 22, 24, 26, 28 and a back surface 36 of a cell housing 32 of a neighbor battery cell 12, 14, 16, 18, 22, 24, 26, 28. A heat transfer unit 40 is arranged between the first battery cell stack 10 and the second battery cell stack 20. The heat transfer unit 40 has a comb structure 50 and includes two heat transfer elements 52, 54, thermally isolated from each other by a thermal isolation layer 56 and nested inside each other. The heat transfer unit 40 has a plurality of contact surfaces 42, 44, 46, 48. The contact surfaces 42, 44, 46, 48 are designed to connect the heat transfer unit 40 to side surfaces 38 of the cell housing 32 of the battery cells 12, 14, 16, 18, 22, 24, 26, 28 in the batterie stacks 10, 20 to dissipate the heat generated in the battery cells 12, 14, 16, 18, 22, 24, 26, 28. Each of the two heat transfer elements 52, 54 is arranged such that the first heat transfer element 52 contacts at least one of battery cells 12, 16, 22, 26 arranged in an even row of the two battery cell stacks 10, 20 and the second heat transfer element 54 contacts at least one of battery cells 14, 18, 24, 28 arranged in an odd row of the two battery cell stacks 10, 20. For example, the first heat transfer element 52 contacts battery cells 12, 16, 22, 26 arranged in every even rows of the two battery cell stacks 10, 20 and the second heat transfer element 54 contacts other battery cells 14, 18, 24, 28 arranged in every odd rows of the two battery cell stacks 10, 20.

The heat transfer unit 40 has the thermal isolation layer 56 arranged between the first and second heat transfer element 52, 54, such that a heat transfer from the first heat transfer element 52 to the second heat transfer element 54 of the heat transfer unit is minimized. The thermal isolation layer 56 may be designed as a plastic coating, a ceramic coating, a glass fiber material or similar thermally non-conducting material. The heat transfer unit 40 is desirable design as a hollow body 58 to reduce the weight of the battery system 100. Furthermore, the hollow body 58 has a lower heat capacity and can therefore dissipate the heat from the heated battery cell 26 more quickly. The heat transfer elements 52, 54 of the heat transfer unit 40 may be made of a material with a high thermal conductivity that can withstand temperatures of more than 800°C without losing its structure. A material of the heat transfer elements 52, 54 may be, for example, copper.

Fig.2 shows an example of a heat spread within a battery system 100 according to the invention, when a battery cell 26 is heated up by a malfunction. The heat transfer unit 40 spreads the heat generated by the heated battery cell 26 in a cell thermal runaway to battery cells arranged in every even rows of the two battery cell stacks 10, 20, but not to the neighbor battery cells 24, 28 divided from the heated battery cell 26 only by means of the thermally isolating cell spacers 30. The heat transfer unit 40 in combination with the thermally isolating cell spacers 30 minimizes the heat flow into the neighbor cells 24, 28, such that a thermal runaway of the neighbor battery cells 24, 28 is not triggered and a chain reaction can be prevented. In this way the heat up of the neighbor cells can by keep under a critical threshold value to prevent the thermal runaway of the neighbor battery cells 24, 28.

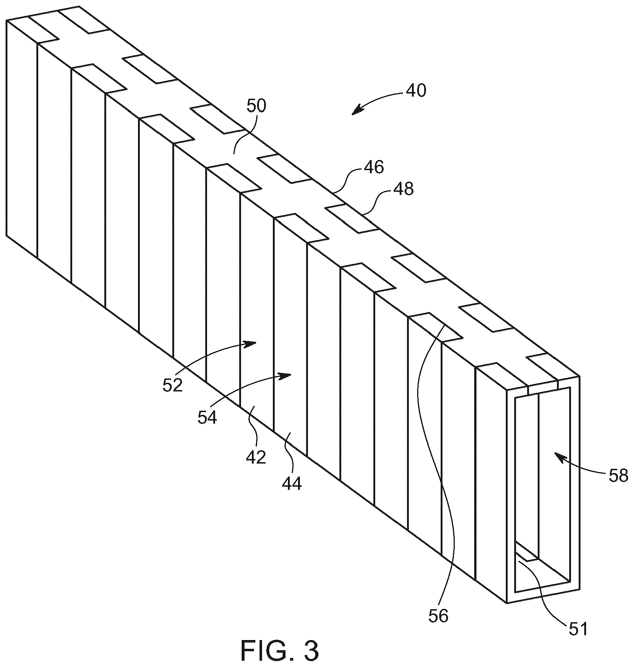

Fig.3 discloses a heat transfer unit 40 according to the invention. The heat transfer unit 40 has a comb-like structure with two different heat transfer elements 52, 54 separated from each by a thermal isolation layer 56 and nested inside each other. Each heat transfer element 52, 54 includes a shaft 50, 51 that holds a row of contact faces 42, 44, 46, 48, which extend perpendicular to the shaft 50, 51. The contact faces 42, 44, 46, 48 include a first portion and a second portion, the second portion being perpendicular to the first portion, such that the contact faces 42, 44 of one side of the shaft 50 being directly opposite to the contact faces 46, 48 of the other side of the shaft 51. The contact surfaces 42, 44, 46, 48 are arranged at regular intervals on the left and right of the shaft 50, forming two rows. The contact faces 42, 44 one side of the shaft 50 can be directly opposite the contact faces 46, 48 on the other side of the shaft 51 as shown in Fig. 3 or they are arranged offset to each other. The two heat transfer elements 52, 54 can be similar or identical. The heat transfer elements 52, 54 can be manufactured as stamped and bent part, wherein the contact faces 42, 44, 46, 48 are bent after the stamping process. The two heat transfer elements 52, 54 having comb-like structure respectively, can be plugged together to form an elongated hollow body 58.

In principle, material, thickness and integration of the heat transfer unit 40 into the battery system 100 is a question of battery back design. The heat transfer unit 40 has a plurality of contact surfaces 42, 44, 46, 48. The contact surfaces 42, 44, 46, 48 are designed to connect the heat transfer unit 40 to side surfaces 38 of the cell housing 32 of the battery cells 12, 14, 16, 18, 22, 24, 26, 28 in the battery stacks 10, 20 to dissipate the heat generated in the battery cells 12, 14, 16, 18, 22, 24, 26, 28. The size of the contact surfaces 42, 44, 46, 48 is determined by the size of the side surface 38 of the cell housing 32 and is ideally the same.

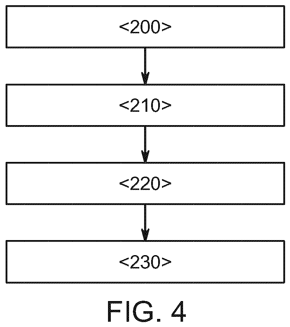

Fig. 4 shows a flowchart of a process according to the invention for transferring heat of a heated battery cell 26 within a battery system 100. The battery cell 26 may be heated up by a malfunction. A heated battery cell is a battery cell whose temperature is far above the normal operating temperature or in which a thermal runaway is already taking place. In a first step <200> a battery system as described in the previous sections is provided. In a second step <210> of the method, the battery cells 12, 14, 16, 18, 22, 24, 26, 28 of the two parallel battery cell stacks 10, 20 are connected to the heat transfer unit 40. In a third step <220> the two heat transfer elements 52, 54 are arranged such that the first heat transfer element 52 contacts at least one of battery cells 12, 16, 22, 26 arranged in an even row of the two battery cell stacks 10, 20 and the second heat transfer element 54 contacts at least one of battery cells 14, 18, 24, 28 arranged in an odd row of the two battery cell stacks 10, 20 conducting heat from the heated up battery cell 26 of the battery cell stacks 10, 20 via the heat transfer unit 40. In a forth step <230> heat from a heated battery cell 26 of one of the battery cell stacks 10, 20 is transferred via the heat transfer elements 52, 54, such that a critical temperature which leads to thermal runaway of a battery cell 24, 28 adjacent to the heated battery cell 26 is not exceeded.

### Reference signs

- 10: first battery cell stack
- 12: first battery cell
- 14: second battery cell
- 16: third battery cell
- 18: fourth battery cell

- 20: second battery cell stack
- 22: fifth battery cell
- 24: sixth battery cell
- 26: seventh battery cell
- 28: eighth battery cell

- 30: thermally isolating cell spacer
- 32: cell housing
- 34: front surface
- 36: back surface
- 38: side surface

- 40: heat transfer unit
- 42: first contact surface
- 44: second contact surface
- 46: third contact surface
- 48: fourth contact surface

- 50, 51: shaft
- 52: first heat transfer element
- 54: second heat transfer element
- 56: thermal isolation layer
- 58: hollow body

- 100: battery system

## Claims

1. A battery system (100), comprising:
a plurality of battery cells (12, 14, 16, 18, 22, 24, 26, 28) arranged in at least one battery cell stack (10, 20), wherein thermally isolating cell spacers (30) are positioned between the battery cells (12, 14, 16, 18, 22, 24, 26, 28), and
a heat transfer unit (40) being disposed on one side of the at least one battery cell stack (10, 20) and comprising a first heat transfer element (52) and a second heat transfer element (54) thermally isolated from each other, wherein the first heat transfer element (52) is adapted to establish a thermally conductive contact at least one of battery cells (12, 16, 22, 26) arranged in an even row of the at least one battery cell stack (10, 20) and the second heat transfer element (54) is adapted to establish a thermally conductive contact at least one of battery cells (14, 18, 24, 28) arranged in an odd row of the at least one battery cell stack (10, 20).

2. The battery system (100) of claim 1, comprising:
a first battery cell stack (10) and a second battery cell stack (20) arranged in parallel to the first cell stack (10), wherein the heat transfer unit (40) is arranged between the first battery cell stack (10) and the second battery cell stack (20) and comprises two heat transfer elements (52, 54), thermally isolated from and nested inside each other, wherein the first heat transfer element (52) contacts battery cells (12, 16, 22, 26) arranged every even rows of the first and second battery cell stacks (10, 20) and the second heat transfer element (52) contacts battery cells (14, 18, 24, 28) arranged ever odd rows of the first and second battery cell stacks (10, 20).

3. The battery system according to claim 1, wherein the first heat transfer element (52) and the second heat transfer element (54) are arranged in a comb structure comprising a shaft (50) that holds a row of contact faces (42, 44, 46, 48).

4. The battery system according to any one of the preceding claims, wherein the first heat transfer element (52) and the second heat transfer element (54) are made of a material which has a higher thermal conductivity than a battery cell housing (32) of the battery cells (12, 14, 16, 18, 22, 24, 26, 28).

5. The battery system according to any one of the preceding claims, wherein the first heat transfer element (52) and/or the second heat transfer element (54) is made of copper.

6. The battery system according to any one of the preceding claims, wherein a thermal isolation layer (56) is arranged between the first heat transfer element (52) and the second heat transfer element (54).

7. The battery system according to claim 6, wherein the thermal isolation layer (56) is made of a plastic coating or a ceramic coating or a glass fiber material.

8. The battery system according to any one of the preceding claims, wherein the heat transfer unit (40) is designed as a hollow body (58).

9. The battery system according to any one of the preceding claims, wherein the battery cells (12, 14, 16, 18, 22, 24, 26, 28) of each battery cell stack (10, 20) are connected to the heat transfer unit (40) via a side surface (38) of a cell housing (32).

10. The battery system according to any one of the preceding claims, wherein the battery cells (12, 14, 16, 18, 22, 24, 26, 28) are prismatic battery cells.

11. A heat transfer unit (40) for a battery system (100), comprising two heat transfer elements (52, 54) separated from each other by a thermal isolation layer (56), wherein each heat transfer element (52, 54) comprises a shaft (50, 51) that holds a plurality of contact faces (42, 44, 46, 48) arranged on both sides of the shaft (50, 51) and forming two rows of contact faces (42, 44, 46, 48) with regular intervals between the contact faces (42, 44, 46, 48).

12. The heat transfer unit (40) according to claim 11, wherein the contact faces (42, 44, 46, 48) extend perpendicular to the shaft (50, 51), wherein the contact faces (42, 44, 46, 48) comprise a first portion and a second portion, the second portion being perpendicular to the first portion and the contact faces (42, 44) of one side of the shaft (50, 51) being directly opposite to the contact faces (46, 48) of the other side.

13. The heat transfer A heat transfer unit (40) according to claim 11 or 12, wherein the first heat transfer layer (52) and the second heat transfer layer (54) are stamped and bent parts.

14. The heat transfer unit (40) according to any of claim 11 to 13, wherein the first heat transfer element (52) and the second heat transfer element (54) are stamped and bent parts.

15. A method for transferring heat within a battery system (100), wherein the method comprises the steps of:
a) providing a battery system (100) as defined in claim 1;
b) connecting the battery cells (12, 14, 16, 18, 22, 24, 26, 28) of each battery cell stack (10, 20) to the heat transfer unit (40),
c) wherein each of the two heat transfer elements (52, 54) is arranged such that the first heat transfer element (52) contacts at least one of battery cells (12, 16, 22, 26) arranged in an even low of the two battery cell stacks (10, 20) and the second heat transfer element (52) contacts at least one of battery cells (14, 18, 24, 28) arranged in an odd low of the two battery cell stacks (10, 20), and
d) transferring heat from a heated-up battery cell (26) of one of the battery cell stacks (10, 20) via the heat transfer unit (40), such that a critical temperature which leads to thermal runaway of a battery cell (12, 14, 16, 18, 22, 24, 26, 28) adjacent to the heated battery cell (26) is not exceeded.
